# EUROPEAN PATENT SPECIFICATION

(11) **EP 2 101 590 B1**
(45) Date of publication and mention of the grant of the patent: **24.11.2010**
(21) Application number: 07817929.8
(22) Date of filing: 07.12.2007
(51) Int. Cl.: A22C 13/00, A22C 17/14

(54) **A PROCESS FOR JOINING OF PIECES OF NATURAL CASING**
VERFAHREN ZUR VERBINDUNG VON TEILEN VON NATURHÜLLEN
PROCÉDÉ DE RÉUNION DE PARTIES D'UN BOYAU NATUREL

(30) Priority: 08.12.2006 DK 200601616
(43) Date of publication of application: 23.09.2009
(73) Proprietor: Dat-Schaub a.m.b.a., 1711 Copenhagen V (DK)
(72) Inventor: HANSEN, Erik Torngaard, 1711 Copenhagen V (DK); HANSEN, Kim, Gaia (PT); ANDERSEN, Knud, 6701 Esbjerg (DK)
(74) Representative: Nilausen, Kim
(86) International application number: PCT/DK2007/000535
(87) International publication number: WO 2008/067820

(56) References cited:
- EP-A- 0 388 912
- WO-A-95/08274
- DE-A1- 10 017 172
- DE-A1- 19 531 831
- DE-A1- 19 538 709
- JP-A- 9 117 252
- JP-A- 2004 131 741

## Description

### Technical field of the invention

The present invention concerns a process for firm joining of pieces of natural casing in order to form desired dimensions, i.e. lengths, designs and calibres (diameters) of casing and casings obtainable by such processes.

### Background of the invention

It is desirable to join pieces of natural casing to get a certain length fitting the apparatus used for for example preparing and treatment of sausages, or to prepare laminated casing products of desired dimensions from cut up casing.

Long pieces of casing have been achieved by sewing them together. However, such treatment is very work consuming, and the binding is not very strong.

It has also been proposed to prepare casings partially welded by using up to 200 °C, but such a high temperature will spoil (cook) the casings.

Further it is common in the art to join pieces of casing by use of sodium hydroxide. However sodium hydroxide is as a chemical agent a strong base and can be etching and therefore not favoured in the processing area. It is inconvenient to use and it can in certain cases give the casing product an unwanted after-taste. The lamination with sodium hydroxide cannot stand to be soaked in water for longer times.

Glue, as set out in DE-A-195 38 709, has also been proposed, but no strong binding is achieved. The binding should be strong enough to stand a stay in water or brine.

From JP200112863 A and JP20044131741 A it is thus known to join casings by use of a lenient cross-binding adhesive, like e.g. animal proteins, such as collagen, gelatine, egg protein, lactoprotein, blood and muscle proteins. The adhesive is applied to at least one of the ends of the casing, whereafter the ends are pressed together.

Thus there is a need for firmly joining of pieces of natural casing without spoiling of the casings and without using potentially harmful chemicals.

A stronger joining is obtained by the method according to the invention without use of chemicals by using transglutaminase, which catalytically promotes the reaction between two pieces of casing. This leniently provides a strong joining capable of standing water and brine.

### Summery of the invention

The invention concerns a process for firm joining of two or more pieces of natural casing to form dimensions, i.e. lengths, designs and calibres, of natural casing, wherein two or more pieces of casing are joined using transglutaminase. This gives a strong, covalent binding.

The invention thus covers a catalyzed reaction between two pieces of natural casing to form desired lengths and catalyzed reaction between two or more pieces of casing to form desired laminated products.

### Detailed description of the invention

In the present invention the term "natural casing" or "casing" is used for intestines from animals, such as pig, sheep, beef, cattle or horse, for use as casing for sausages or for other food products. Intestines from young animals, such as lamb and calf, are also covered. Intestines from other animals can be used. The casings can either be fresh or salted casings. Salted casings will normally be slightly desalted in water before use in the present invention. The casing can be cut up.

Transglutaminases are a widely distributed group of enzymes that catalyse the formation of isopeptide bonds. This polymerization and cross-linking of proteins occurs through the formation of strong covalent bonds between protein molecules. Transglutaminases are already used in the food industry in a variety of food processes. The nutritional value is not lost using transglutaminases. The cross-linked proteins have no adverse effect and can be readily absorbed in the human body.

Transglutaminases useful in the present invention can be the commercial product ACTIVA^{™}EB from AJINOMOTO, Japan, but are not limited to this product. Transglutaminase from AJINOMOTO is produced by fermentation. Transglutaminases are also found in many organisms of animal or vegetable origin:

| Mammals | Birds | Fish | Plants | Others |
|---|---|---|---|---|
| | | | | |
| Human, pig, | Chicken, | Tuna, | Peas, | Shrimps, |
| cow, | pigeon | mackerel | broccoli, | scallop, oyster |
| Sheep, rabbit | | Salmon etc | spinach | |
| etc | etc | | | |
| Liver, heart, | Gizzard, | Muscle, liver | Growing | Muscle, egg |
| kidney, blood | blood | | shoot, leaves | |

Transglutaminases are easily inactivated by raising the temperature:

| Temperature | Time required for inactivation |
|---|---|
| 65 °C | 2 hours |
| 70 °C | Within 15 min |
| 75 °C | Within 5 min |
| 80 °C | Within 1 min |

and the inactivated transglutaminase does not impair the quality of the food product.

The process of the invention is a process for firm joining of two or more pieces of natural casing to form desired lengths, designs or calibres of natural casing wherein two or more pieces of casing are joined using transglutaminase.

Every kind of transglutaminase is applicable in the invention.

Two or more pieces of natural casing can be joined to form a long casing useful for sausages. Normally this is done by applying transglutaminase powder evenly on one end, and the other end is pulled forward to create an overlap of not more than 0.5-2 cm, whereafter air bubbles are removed be a light pressure. It is enough to press by a finger stroke.

It is possible to use a larger overlap. However this is not necessary because of the very strong binding and would mean a larger waste, because sausages made using the casing will not be graded as first quality, if they have an overlap. They are normally destroyed.

It is possible to apply transglutaminase by sprinkling dry powder on one or both pieces of casing to be joined or to use any other way. Thus, it is also possible to use submission of one or both ends in a solution of transglutaminase or to use a brush or the like mean to apply the transglutaminase as a powder or a solution.

Two or more pieces of natural casing can after longitudinal cut of the casing be joined in layers after submission and stirring in a solution of transglutaminase in cold water and a light pressure. Thereby a laminated casing is formed. This can be done, but need not be done, on a mould.

In the preparation of laminates it is also possible to apply the transglutaminase in any way, for example as powder.

The temperature for the transglutaminase treatment is not critical as long as it is not damaging the casing or inactivating the transglutaminase. However, it will take more time to be effective at a low temperature.

It is normally enough to apply about 50-200 mg corresponding to 0.2-13 U of transglutaminase for an overlap of 0.5-2 cm on pig intestines. However, much larger amounts can be used without any harmful effects. A transglutamanase solution will normally be a 10-20% w/vol solution corresponding to 3-13 U/ml. However, this concentration is not critical. More transglutaminase will not harm the product in any way, but it is superfluously.

Normally a transglutaminase bath is prepared in water of a temperature of 0-10 °C. Higher or lower temperatures can be used, as long as the transglutaminase is not inactivated.

Laminated casings are normally left over night at about 5 - 60 °C. The temperature is not critical, so normal room temperature or normal refrigerator temperature can be used.

The invention is further illustrated by the following non limiting examples.

### Example 1

The wanted two parts of casing from pig were pulled on a tube leaving the two ends to be reacted towards each other. Transglutaminase powder "Activa EB" was sprinkled evenly on one end approximately 1-1½, cm, and the other piece was pulled forward to create a 0.5-2 cm or longer overlap. A slight pressure was applied to the overlap to remove/avoid air bubbles. This process may be repeated to create the desired length of the final casing. The product was covered with foil and left to react 45 min at 50 °C and thereafter overnight at room temperature.

### Example 2

The wanted two parts of casing from pig were pulled on a tube leaving the two ends to be reacted towards each other. Transglutaminase powder "Activa EB" was sprinkled evenly on one end approximately 1-1½ cm, and the other piece is pulled forward to create a 0.5-2 cm overlap. A slight pressure was applied to the overlap to remove/avoid air bubbles. The process may be repeated to create the desired length of the final casing. The product was covered with foil and left to react 10 hours at 5 °C. This process may be repeated to create the desired length of the final casing.

### Example 3

The wanted two parts of casing from pig were pulled on a tube leaving the two ends to be reacted towards each other. Transglutaminase powder "Activa EB" was sprinkled evenly on one end approx. 1-1½ cm, and the other piece was pulled forward to create a 0.5-2 cm over lap. A slight pressure was applied to the overlap to remove/avoid air bubbles. The process may be repeated to create the desired length of the final casing. The product was covered with foil and left to react 10 hours at room temperature.

### Example 4

The wanted two parts of casing from pig were pulled on a tube leaving the two ends to be reacted towards each other. Transglutaminase powder "Activa EB" was sprinkled on the surfaces which should react evenly on both ends approximately 1-1½ cm and the other piece was pulled forward to create a 0.5-2 cm overlap. A slight pressure was applied on the overlap to remove/avoid air bubbles. This process may be repeated to create the desired length of the final casing. The product was covered with foil and left to react for at least 10 hours at 5 °C.

### Example 5

The wanted one part of casing was pulled on a tube leaving the end to be dipped into the transglutaminase powder "Activa EB" to achieve an evenly spread enzyme. The second casing part was added to the tube with an overlap of 0.5-2 cm. A slight pressure was applied on the overlap to remove/avoid air bubbles. The rest of the second casing was pulled onto the tube. This process may be repeated to create the desired length of the final casing. The product was covered with foil and left to react 10 hours at room temperature.

### Example 6

### Lamination.

A 10-20% w/vol solution of transglutaminase powder "Activa EB" was made up in cold water and the casing raw material (pig intestine) was added and stirred around and left for 0 to 5 min. The enzyme solution wetted casing was layered on a mould with an appropiate overlap in one, two or more layers. A slight pressure was applied on the overlap to remove/avoid air bubbles, whereafter the product was left to react overnight at 5-10 °C.

### Example 7

### Lamination.

A 10-20% w/vol solution of transglutaminase powder "Activa EB" was made up in cold water and the casing raw material (pig intestines) was added and stirred around and left for 0 to 5 min. The enzyme solution wetted casing was layered on a mould with an appropiate overlap in one, two or more layers. A slight pressure was applied on the overlap to remove/avoid air bubbles, whereafter the product was left to react overnight at 40 - 60 °C

### Example 8

### Lamination.

The casing material (pig intestines) was layered on the mould and transglutaminase powder "Activa EB" was sprinkled to achieve an evenly spread enzyme on the areas to be reacted. Next layer(s) was/were added onto the first layer. A slight pressure was applied on the overlaps to remove/avoid air bubbles, whereafter the product was left to react overnight at 5-10 °C.

### Example 9

### Lamination.

The casing material (pig intestines) was layered on a mould and transglutaminase powder "Activa EB" was sprinkled to achieve an evenly spread enzyme on the areas to be reacted. Next layer(s) was/were added onto the first layer. A slight pressure was applied on the overlaps to remove/avoid air bubbles, whereafter the product was left to react overnight at 40 - 60 °C.

## Claims

1. A process for firm joining of two or more pieces of natural casing to form desired lengths, designs or calibres of natural casing, wherein two or more pieces of casing are joined using transglutaminase, transglutaminase being applied on at least one of the pieces of casing to be joined, whereafter it is pressed together with another piece of casing with which it is to react.

2. A process of claim 1, wherein two or more pieces of natural casing are joined to form a casing of desired length, transglutaminase being applied on at least one of the pieces of casing to be joined, whereafter it is pressed together with another piece of casing with which it is to react.

3. A process of claim 1 for joining of two or more pieces of natural casing to form a laminated casing, transglutaminase being applied on at least one of the pieces of casing to be joined, whereafter it is pressed together with another piece of casing with which it is to react.

4. A process of claim 2, wherein transglutaminase powder is applied evenly on one end and the other end is pulled forward to create an overlap of not more than 0.5 - 2 cm, whereafter air bubbles are removed or avoided by creating a light pressure on the overlap.

5. A process of claim 2, wherein transglutaminase powder is applied evenly on the ends to be joined and one end is pulled forward to create an overlap between the two ends of not more than 0.5 - 2 cm, whereafter air bubbles are removed or avoided by creating a light pressure on the overlap.

6. A process of claim 3, wherein one layer of a length of casing cut in the longitudinal direction is submerged and stirred in a solution of transglutaminase in cold water, whereafter two or more pieces of casing are layered, pressured slight and left overnight.

7. A casing of desired length, design or caliber formed by joining two or more pieces of natural casing by a covalent binding between protein molecules, wherein said casing is obtainable by a process according to any one of claims 1 to 6.

8. A casing comprising one or more joining obtained by a process according to any one of claims 1 to 6.

9. A casing according to claim 7 or 8, wherein the casing is from pig, sheep, lamb, beef, cattle, calf, or horse.

10. A casing according to any one of claims 7 to 9, wherein the casing is a fresh or salted casing.

11. A joining between two pieces of natural casing provided by forming a covalent binding between protein molecules of the pieces of natural casing, wherein said joining is obtainable by a process according to any one of Claims 1 to 6.

12. A joining according to claim 11, wherein the casing is from pig, sheep, lamb, beef, cattle, calf, or horse.

13. A joining according to claim 11 or 12, wherein the casing is a fresh or salted casing.

14. A laminated casing product formed by joining two or more pieces of natural casing by covalently binding between protein molecules, said laminated casing product being obtainable by a process according to any one of claims 1 to 6.

15. Use of a casing according to any one of claims 7 to 10 for the preparation of sausages, for the treatment of sausages, or for the preparation of a laminated casing product.

## Patentansprüche

1. Verfahren zur festen Verbindung von zwei oder mehreren Teilen einer Naturhülle zur Formung von gewünschten Längen, Ausformungen oder Kalibern einer Naturhülle, wobei zwei oder mehrere Teile einer Hülle durch Verwendung von Transglutaminase verbunden werden, wobei die Transglutaminase auf zumindest einen der zu verbindenden Teile einer Hülle aufgetragen wird, wonach sie mit einem anderen Teil einer Hülle, mit welchem sie reagieren soll, zusammengepresst wird.

2. Verfahren nach Anspruch 1, wobei zwei oder mehrere Teile einer Naturhülle zur Formung einer Hülle mit einer gewünschten Länge verbunden werden, wobei die Transglutaminase auf zumindest einen der zu verbindenden Teile einer Hülle aufgetragen wird, wonach sie mit einem anderen Teil einer Hülle, mit welchem sie reagieren soll, zusammengepresst wird.

3. Verfahren nach Anspruch 1 zur Verbindung von zwei oder mehreren Teilen einer Naturhülle zur Formung einer laminierten Hülle, wobei die Transglutaminase auf zumindest einen der zu verbindenden Teile einer Hülle aufgetragen wird, wonach sie mit einem anderen Teil einer Hülle, mit welchem sie reagieren soll, zusammengepresst wird.

4. Verfahren nach Anspruch 2, wobei auf ein Ende ein Transglutaminase-Pulver gleichmäßig aufgetragen wird, und das andere Ende zur Formung einer Überlappung von nicht mehr als 0,5-2 cm nach vorn gezogen wird, wonach Luftbläschen durch Erzeugung eines leichten Drucks auf die Überlappung entfernt oder vermieden werden.

5. Verfahren nach Anspruch 2, wobei auf die zu verbindenden Enden ein Transglutaminase-Pulver gleichmäßig aufgetragen wird, und ein Ende zur Formung einer Überlappung zwischen den beiden Enden von nicht mehr als 0,5-2 cm nach vorn gezogen wird, wonach Luftbläschen durch Erzeugung eines leichten Drucks auf die Überlappung entfernt oder vermieden werden.

6. Verfahren nach Anspruch 3, wobei eine in die Längsrichtung geschnittene Schicht von einer Länge einer Hülle eingetaucht und in einer Lösung von Transglutaminase in kaltem Wasser umgerührt wird.

7. Hülle mit einer gewünschten Länge, Ausformung oder einem Kaliber, welche durch Verbindung zweier oder mehrerer Teile einer Naturhülle durch eine kovalente Bindung zwischen Proteinmolekülen gebildet wird, wobei die Hülle durch ein Verfahren nach irgendeinem der Ansprüche 1 bis 6 erhältlich ist.

8. Hülle, umfassend eine oder mehrere Verbindungen, die durch ein Verfahren nach irgendeinem der Ansprüche 1 bis 6 erhältlich sind.

9. Hülle nach Anspruch 7 oder 8, wobei die Hülle aus einem Schwein, Schaf, Lamm, Rind, Vieh, Kalb oder Pferd stammt.

10. Hülle nach irgendeinem der Ansprüche 7 bis 9, wobei die Hülle eine frische oder gesalzene Hülle ist.

11. Eine Verbindung zwischen zwei Teilen einer Naturhülle, die durch Ausbilden einer kovalenten Bindung zwischen Proteinmolekülen der Teile einer Naturhülle bereitgestellt wird, wobei die Verbindung durch ein Verfahren nach irgendeinem der Ansprüche 1 bis 6 erhältlich ist.

12. Eine Verbindung nach Anspruch 11, wobei die Hülle aus einem Schwein, Schaf, Lamm, Rind, Vieh, Kalb oder Pferd stammt.

13. Hülle nach Anspruch 11 oder 12, wobei die Hülle eine frische oder gesalzene Hülle ist.

14. Laminiertes Hüllenprodukt, das durch Verbindung zweier oder mehrerer Teile einer Naturhülle durch kovalente Bindung zwischen Proteinmolekülen ausgebildet wird, welches laminierte Hüllenprodukt durch ein Verfahren nach irgendeinem der Ansprüche 1 bis 6 erhältlich ist.

15. Verwendung einer Hülle nach irgendeinem der Ansprüche 7 bis 10 zur Zubereitung von Würstchen, zur Behandlung von Würstchen oder zur Zubereitung eines laminierten Hüllenprodukts.

## Revendications

1. Procédé pour la réunion ferme de deux ou de plusieurs parties de boyau naturel pour créer des longueurs, des formes ou des calibres voulus du boyau naturel, dans lequel deux ou plusieurs parties de boyau sont reliées l'une à l'autre en utilisant la transglutaminase, la transglutaminase étant appliquée sur au moins l'une des parties de boyau à relier, ensuite elle est pressé contre une autre partie de boyau avec laquelle elle est à réagir.

2. Procédé selon la revendication 1, dans lequel deux ou plusieurs parties de boyau naturel sont reliées l'une à l'autre pour créer un boyau d'une longueur voulue, la transglutaminase étant appliquée sur au moins l'une des parties du boyau à relier, ensuite elle est pressée contre une autre partie de boyau avec laquelle elle est à réagir.

3. Procédé selon la revendication 1 pour la réunion de deux ou de plusieurs parties de boyau naturel pour former un boyau stratifié, la transglutaminase étant appliquée sur au moins l'une des parties de boyau à relier, ensuite elle est pressé contre une autre partie de boyau avec laquelle elle est à réagir.

4. Procédé selon la revendication 2, dans lequel la poudre de transglutaminase est appliquée uniformément sur une extrémité et l'autre extrémité est tirée en avant pour créer un chevauchement qui n'excède pas 0,5 - 2 centimètres, ensuite des bulles d'air sont éliminées ou évitées en créant une légère pression sur le chevauchement.

5. Procédé selon la revendication 2, dans lequel la poudre de transglutaminase est appliquée uniformément sur les extrémités à relier et une extrémité est tirée en avant pour créer un chevauchement entre les deux extrémités qui n'excède pas 0,5 - 2 centimètres, ensuite des bulles d'air sont éliminées ou évitées par la création d'une légère pression sur le chevauchement.

6. Procédé selon la revendication 3, dans lequel une couche d'une longueur de boyau découpée dans la direction longitudinale est immergée et remuée dans une solution de transglutaminase dans l'eau froide, ensuite deux ou plusieurs parties de boyau sont disposées par couche, maintenues sous une légère pression et laissés pendant la nuit.

7. Boyau d'une longueur, d'une forme ou d'un calibre voulus, crée par la réunion de deux ou de plusieurs parties de boyau naturel par un agent liant covalent entre des molécules de protéines, où le boyau peut être obtenu par un procédé selon l'une quelconque des revendications 1 à 6.

8. Boyau, comprenant une ou plusieurs liaisons obtenues par un procédé selon l'une quelconque des revendications 1 à 6.

9. Boyau selon la revendication 7 ou 8, où le boyau dérive du porc, du mouton, de l'agneau, du boeuf, du veau ou du cheval.

10. Boyau selon l'une quelconque des revendications 7 à 9, où le boyau est un boyau frais ou salé.

11. Liaison entre deux parties de boyau naturel, établie par la formation d'un agent liant covalent entre des molécules de protéines des parties de boyau naturel, où la liaison peut être obtenue par un procédé selon l'une quelconque des revendications 1 à 6.

12. Liaison selon la revendication 11, où le boyau dérive du porc, du mouton, de l'agneau, du boeuf, du veau ou du cheval.

13. Liaison selon la revendication 11 ou 12, où le boyau est un boyau frais ou salé.

14. Produit de boyau stratifié créé par la réunion de deux ou de plusieurs parties de boyau naturel en liant de manière covalente entre les molécules de protéines, le produit de boyau stratifié pouvant être obtenue par un procédé selon l'une quelconque des revendications 1 à 6.

15. Usage d'un boyau selon l'une quelconque des revendications 7 à 10 pour la préparation des saucissons, pour le traitement des saucissons ou la préparation d'un produit de boyau stratifié.
